# EUROPEAN PATENT SPECIFICATION

(11) **EP 1 798 207 B1**
(45) Date of publication and mention of the grant of the patent: **09.11.2016**
(21) Application number: 05765380.0
(22) Date of filing: 28.06.2005
(51) Int. Cl.: C03B 40/02

(54) **METHOD FOR MANUFACTURING MOLD HAVING BAKED LUBRICANT RELEASING AGENT LAYER**
VERFAHREN ZUR HERSTELLUNG EINER FORM MIT EINGEBRANNTER SCHMIERMITTELFREISETZUNGSSCHICHT
PROCÉDÉ SERVANT À FABRIQUER UN MOULE AYANT UNE COUCHE D'AGENT LIBÉRANT UN LUBRIFIANT CUITE

(30) Priority: 01.07.2004 JP 2004195300
(43) Date of publication of application: 20.06.2007
(73) Proprietor: Nihon Yamamura Glass Co. Ltd., Hyogo 6608580 (JP)
(72) Inventor: UEDA, Mitsuo; c/o NIHON YAMAMURA GLASS CO.,, Hyogo 6628586 (JP); OHNO, Taro; c/o NIHON YAMAMURA GLASS CO., LTD.,, 662 8586 Hyogo (JP); YASUDA, Mitsuhiro; c/o NIHON YAMAMURA GLASS CO.,, Hyogo 6628586 (JP); MIYAZAKI, Manabu; c/o NIHON YAMAMURA GLASS CO.,, Hyogo 6628586 (JP)
(74) Representative: Isarpatent
(86) International application number: PCT/JP2005/011820
(87) International publication number: WO 2006/003884

(56) References cited:
- WO-A-01/28942
- WO-A-99/00534
- JP-A- 4 238 679
- JP-A- 4 367 530
- JP-A- 10 046 355
- JP-A- 10 158 668
- JP-A- 57 038 339
- JP-A- 2003 285 126
- US-A- 4 003 867

## Description

### [TECHNICAL FIELD]

The present invention relates to a method for preparation of a glass forming mold having a baked layer of lubricating mold-releasing agent on the mold surface (i.e., the surface which contacts glass being formed), and more specifically, to such a method of preparation in which high-frequency induction heating is used for baking the lubricating mold-releasing agent.

### [BACKGROUND ART]

In the production of glass objects using a glass forming mold, a lubricating mold-releasing agent is applied onto the mold surface in order to promote sliding of molten glass material (gob) on the mold surface of a glass forming mold (of cast-iron in general), thereby preventing occurrence of defect in the surface of the glass objects formed, as well as promoting easier release of the formed objects from the mold. As a lubricating mold-releasing agent, dispersed graphite in an oily liquid has long been known. This, applied onto the mold surface before starting a forming process, has only poor durability and is greatly worn out as it is oxidized upon contact with the high-temperature gobs or adheres and is transferred to the surface of formed objects, and, therefore, must be applied at frequent intervals. In contrast, a lubricating mold-releasing agent is known which is made from a monobasic phosphate of aluminum, chromium, zirconium or nickel, etc. and an aliphatic amine, as a neutralizing agent, such as butylamine, dipropylamine or monoethanolamine, and a solvent such as water or an alcohol, which agent is used by applying it onto the mold surface and baked it to solidify for about 1-2 hours at a temperature of, e.g., 250-350 °C in an oven (see Patent Document 1). When it is baked in such a manner, however, it often causes such defects to take place as blisters in the layer of the lubricating mold-releasing agent on the mold surface, peeling of the layer or surface roughening, which sometimes have caused defects in the surface of the formed objects and greatly shortened the durable hours of the mold. Further, there are also some cases where the lubricating mold-releasing agent, even if it apparently is in a good surface condition at the time when its baking onto the mold surface is completed, comes to suffer defects, when contacting high-temperature molten glass, such as blister formation, peelings or surface roughening in a short time. And this has also given harmful effects on glass objects formed using such a mold, and shortened durable hours of the mold, too. Furthermore, there has been substantial fluctuation in the quality of baked layers of lubricating mold-relating agent. In the case of mass production of glass objects, in which a number of molds are used at a time, it is actually impossible to examine the condition of the baked layer of a lubricating mold-releasing agent for every one of the molds. Therefore, as a result, such inefficient procedures have been unavoidably followed as taking measures like application of oil (application of mineral oil containing graphite, etc.) to all the molds at the same time or, otherwise, subjecting all the molds again to the process of application of a lubricating mold-releasing agent and baking, at a time when a defect is first found in one of the molds.

Moreover, the above method has a further problem that it gives no small fluctuation, among molds, in friction coefficient of the surface of baked layers of a lubricating mold-releasing agent, and, consequently, uneven sliding of molten glass (gob) occurs when it slides into, e.g., a blank mold (consisting of a pair of half-molds), thereby causing defects in the formed object.

Furthermore, apart from those problems in the quality of the layer of a lubricating mold-releasing agent, that it takes a very long time according to the conventional method, i.e., 1-2 hours, for baking a lubricating mold-releasing agent, also has posed a factor greatly hampering attempts to improve the efficiency of the process of manufacturing formed glass objects.

US 4 003 867 discloses a coating composition, coated article and method dealing with the preparation of coated surfaces which are useful in glass molding wherein a relatively lubricious, abrasion resistant surface is desired under conditions of high operating temperatures.

WO 99/00534 describes a method for producing a hard layer on tools for processing liquid or semi-liquid glass, plungers and plugs for producing hollow glassware and a device for inductive sintering or sealing in hard layers on plungers and plugs for producing hollow glassware, wherein a liquid or paste mixture of a coating material and a carrier liquid or a paste is produced.
[Patent Document 1] Japanese Patent Application Publication No. S57-38339

### [DISCLOSURE OF INVENTION]

### [The Problem to be Solved by the Invention]

Against the above background, the objective of the present invention is to provide a method for preparation of a glass forming mold having a baked layer of a lubricating mold-releasing agent with reduced fluctuation in its lubricating property, by baking a layer of a lubricating mold-releasing agent in a manner that prevents defects like blistering, peeling of the layer or surface roughening, and, in particular, a method that enables the baking process to be done in a greatly shorter time than the conventional method.

### [Means to Solve the Problem]

In the process of the study for achieving the above objective, the present inventors found that the cause of the defect seen in conventionally baked layers of a lubricating mold-releasing agent consists in that oil or solvent which originally was contained in a lubricating mold-releasing agent and then infiltrated into a number of microscopic cracks in the mold surface, exudes on the surface upon baking, and that since the layer of a lubricating mold-releasing agent has already been solidified in the atmosphere in the oven (such as an electric furnace) when the oil or solvent begins to exude, the exudate or its vapor is trapped in the interface between the mold surface and the layer of the lubricating mold-releasing agent, acting there as a chief cause of defects like blistering, peeling of the layer and surface roughening of the lubricating mold-releasing agent.

On the basis of the above finding, the present inventors focused attention on a possibility that the occurrence of those defects in the baked layer of a lubricating mold-releasing agent may be suppressed by directly heating the mold and thereby baking the layer of a lubricating mold-releasing agent by the heat coming from the mold, not by heating the layer of a lubricating mold-releasing agent from its surface side by exposing it to a heated atmosphere, as is done when the mold with a lubricating mold-releasing agent applied on it is placed in an oven. As a result of further studies, the inventors found that an evenly formed layer of a lubricating mold-releasing agent can be formed in a very short time by using, but under a restrained power output condition, high-frequency induction heating as a means for heating the mold. The present invention was completed based upon these findings.

Thus, the present invention provides what follows:
(1) A method for preparation of a glass forming mold having a baked layer of a lubricating mold-releasing agent on the mold surface thereof, wherein the method comprises placing the mold surface with an applied lubricating mold-releasing agent thereon to face a high-frequency induction heating coil at a predetermined mutual position, and heating the mold surface by exposing the same to a high-frequency magnetic flux by passing a high-frequency electric current to the high-frequency induction heating coil, at a power output so adjusted that the mold surface may reach a predetermined baking temperature in a predetermined length of time after the start of heating, wherein the predetermined baking temperature is a temperature in the range of from 300 to 600 °C, the length of time for which the mold surface is exposed to the high-frequency magnetic flux for heating is a length of time in the range of from 5 seconds to 30 minutes, and wherein the predetermined baking temperature is reached in not shorter than 5 seconds.
(2) The method of 1 above, wherein at least part of the high-frequency induction heating coil comes close to the mold surface up to a distance within 50 mm therefrom.
(3) The method of 1 or 2 above, wherein the mold surface and the high-frequency induction heating coil are moved relative to each other while the mold surface is being exposed to the high-frequency magnetic flux.
(4) The method of 3 above, wherein the mold surface and the high-frequency induction heating coil are rotated relative to each other while the mold surface is being exposed to the high-frequency magnetic flux.
(5) The method of 4 above, wherein the rate of rotation is at least 20 rpm.
(6) The method of one of 1 to 5 above, w herein the mold surface is exposed to the high-frequency magnetic flux, with multiple partial molds of the mold being electrically connected to one another and brought together and secured while maintaining a gap of at least 1 mm between the edges of any two adjacent partial molds.

### [Effect of the Invention]

The present invention as defined above enables to prepare, in a very short time, a glass forming mold having on its mold surface a baked layer of a lubricating mold-releasing agent which, as compared with conventional ones, is free of defects, has higher lubricity and is even and smooth.

### [BEST MODE FOR CARRYING OUT THE INVENTION]

High-frequency induction heating is a method for heating, by which a high-frequency current is passed through a high-frequency induction heating coil to generate a high-frequency magnetic flux, to which an electrically conductive object placed near the coil is exposed, and the surface of the electrically conductive object is heated through electromagnetic induction which is caused by the magnetic flux penetrating the electrically conductive object. In the present invention, the term "high-frequency" may be a frequency in a range 1 kHz to 400 kHz, and any frequency falling within the range may be preferably employed. Therefore, a frequency may be chosen as desired, like 10 kHz, 20 kHz, 30 kHz, 50 kHz, 60 kHz, 100 kHz, 200 kHz, and so on. A frequency of from 20 kHz to 60 kHz, for example, is conveniently employed.

A high-frequency induction heating coil is a coil through which a high-frequency current is to be passed, and there is no specific limitation as to its shape. In general, it is a coil made of a pipe which is formed so as to pass cooling water through it.

For molding, for example, glass bottles, such molds are used as a blank mold, a baffle, a neck ring, a bottom plate, a blow mold and the like. A blank mold is a mold for receiving a gob and forming a parison having a shape which is in conformity to the shape of its mold surface. A baffle is a mold which supports the bottom of the parison while it is being formed. A neck ring is a mold which is used together with a blank mold, a baffle and a plunger to form a finish portion of the bottle as a parison is formed. A bottom plate and a blow mold are molds which are used to form the final shape of a glass bottle by blowing the parison within a cavity enclosed by them. In practicing the present invention, each of the glass forming molds, e.g., a blank mold, a baffle, a neck ring, a bottom plate, a blow mold and the like, is applied on its mold surface a conventionally used lubricating mold-releasing agent for baking, and the lubricating mold-releasing agent then is baked by passing a high-frequency electric current through a high-frequency induction heating coil which is placed to face the mold surface. The manner in which the coil is placed to face the mold surface may be chosen as desired. But the closer they are, the higher the energy efficiency is. Therefore, from this point of view, it is preferable that the surface of the coil is placed close to the mold surface. In general, the shape into which the coil is to be wound may be adjusted so that they may come within a distance not more than 50 mm, e.g., about 10 mm, or, further, about 2-5 mm. If the energy efficiency is to be set aside, it is also allowed to increase the distance between the mold surface and the coil in accordance with the difficulty in adjusting the shape into which the coil is wound. Therefore, there is no specific limitation as to the shape into which the coil is wound. For example, for a mold surface which is cylindrical or semi-cylindrical, though a helix coil is preferred in view of good energy efficiency, if it is difficult to form a coil into such a shape, it may be formed into a simple, single loop coil, e.g., of a general U-shape or the like. In the present invention, a simple, generally U-shaped conductive body through which to pass a high-frequency current for heating an object is also called a "high-frequency induction heating coil". Again, for a disk-like mold surface including a concave or convex surface portion, like those of a baffle or a bottom plate, though a convolute coil parallel to their shapes is preferred for good energy efficiency, the coil may also be formed into a simple shape such as a nearly U shape and the like, for convenience in shaping it.

Though induction heating of the mold surface of a glass forming mold to which a lubricating mold-releasing agent has been applied may be carried out one by one for each of its partial molds which as a whole form one mold, it is also allowed that two or more of them which are combined are treated. For example, a blank mold used in forming glass bottles, which consists of a pair of half-molds each having a semi-cylindrical mold surface, may be dealt with separately for each of its half-mold, or a cylindrical mold surface formed by them when they are combined may be heated by inserting a high-frequency induction heating coil into its cavity. The latter method is preferred to the former, for it achieves far higher energy efficiency. As far as the shape of the mold surface permits, a blank mold and a baffle, or a blank mold and a neck ring, may be combined, and into the cavity thus formed may be introduced a high-frequency induction heating coil to perform heating.

When simply combined two or more partial molds, such as a pair of half-molds, a blank mold and a baffle, and the like, are induction heated on their mold surface, sparks will be generated between the edges of adjacent ones of combined partial molds and melt down the portion. As a result of the study for a method to prevent this from taking place, it was found that this is prevented by providing a gap (not less than 1 mm) between the opposed edges of the mold surface of adjacent partial molds while maintaining electrical connection between the partial molds. While a convenient method to achieve this is to secure partial molds to each other while sandwiching between their meeting faces conductor pieces (e.g., a cupper plate), with their edges being placed somewhat (not less than 1 mm) receding from the mold surface, any method may be employed as desired in accordance with the shape and structure of given partial molds.

Heating of the mold surface must be performed in a mild manner, as opposed to such instantaneous heating or heating to a red-hot state as conventionally being conducted using induction heating in the process of quenching of gears, bearings, shafts, etc. Thus it is necessary to set a condition of heating which is mild considering for the nature of induction heating, so that, setting a temperature falling in the range of 300-600 °C as a target temperature of the mold surface, it must take about five or more seconds for the temperature of the mold surface to reach the target temperature (referred to in the present invention as a "baking temperature). For, if the temperature has risen in less than 5 seconds, there is a risk that solvent or its vapor exuding, during that time, from microscopic crack in the mold surface and entering between the mold surface and the layer of a lubricating mold-releasing agent, could not thoroughly be removed before sintering of the lubricating mold-releasing agent takes place and thus trapped there. By taking a length of time of five seconds or more for heating, from the mold side, the layer of the lubricating mold-releasing agent on the mold, exuding solvent or its vapor is released from the surface of the layer of a lubricating mold-releasing agent and thus removed from the interface between the mold surface and the layer of the lubricating mold-releasing agent. This enhances adherence of the lubricating mold-releasing agent to the mole surface and enables to bake the lubricating mold-releasing agent to form an even layer of the lubricating mold-releasing agent which is free of blistering or surface roughening. As a result, the friction coefficient of the baked layer of the lubricating mold-releasing agent is also made even from mold to mold. Further, it was also found that, according to the present invention, the friction coefficient of the baked layer of a lubricating mold-releasing agent is reduced as compared with one obtained by the conventional method. These factors, by providing a smooth flow of gobs contacting the mold surface and thereby eliminating unevenness of the flow, serve to reduce the incidence of defects in the surface of the parison and formed objects. Again, thus achieved evenness of the layer of a lubricating mold-releasing agent, and of friction coefficient also, among multiple molds used in mass production of formed glass objects, makes the process control easier all through the production, and enables to reduce the frequency of baking of a lubricating mold-releasing agent on the molds. Furthermore, since the length of time required for baking a lubricating mold-releasing agent is greatly shortened, remarkable improvement in operating efficiency is achieved.

In so far as it takes five seconds or more, there is no specific limitation as to the length of time required for raising the temperature of the mold surface. However, taking too long a time will not be unproductive and only make complex the setting of conditions, like fine control of the voltage levels while induction heating is taking place. In general, it is sufficient that the mold surface should reach a predetermined baking temperature within a length of time which is not more than 30 minutes. Thus, the length of time during which the exposure to a high-frequency magnetic flux is to take place (referred to in the present specification as "heating time") may be set within the range of, e.g., from 8 seconds to 10 minutes, or from 10 seconds to 5 minutes.

When the temperature of the mold surface reaches a predetermined baking temperature, heating may be terminated and the mold let to cool, since no heating is needed any more. In the case where it is intended to maintain the temperature of the mold at some levels, however, heating may be kept for a desired length of time by, e.g., continuing induction heating at lowered voltage levels.

For heating the mold surface in a manner that meets the objective of the present invention, each of molds of a given shape to be treated (each of partial molds or combined ones of some of them) and each of high-frequency induction heating coils of a given shape to be used for heating it are set in a specific spatial relationship in advance, and then conditions of voltage and frequency are set. To do this, it is necessary to detect the temperature of the mold surface while it is being induction heated. Detection of the temperature of the mold surface may be performed using, e.g., a radiation thermometer, or it may be performed by marking the mold surface with a marker for the temperature to be detected (e.g., Tempil stick TSC0400 which melts at 400 °C, Tempil Inc., New York) selected from commercially available crayon-type temperature detection markers each of which comprises compounds that melts at a predetermined temperature (e.g., 300 °C, 310 °C, ----- 350 °C ----- 390 °C, 400 °C, 420 °C ---- etc.), and observing the change occurring in the mark during induction heating. Once determination has been made as to conditions of frequency and voltage and the length of time required, under those conditions, for heating, up to a predetermined baking temperature within that predetermined length of time, a mold surface of a predetermined shape against which a high-frequency induction heating coil of a predetermined shape is placed in a predetermined mutual position, then the intended heating and baking can be achieved by induction heating for the same length of time as found to be required for achieving the same temperature, using a mold to which a lubricating mold-releasing agent has been applied and a high-frequency induction heating coil, both of the same shapes, respectively, under the same conditions. The frequencies and the voltages to be applied both have effect on the speed of induction heating. A condition, however, under which the mold surface is brought to the predetermined baking temperature in a desired length of time not shorter than five seconds (e.g., within 10 minutes), can easily be found by, while fixing a frequency, e.g., at several dozen kHz, repeating measurement of the length of time in which the mold surface reaches the predetermined baking temperature, several times starting usually with a low voltage and gradually increasing it. Thus, once it has been determined that the mold surface reaches the predetermined baking temperature in a certain length of time (t) within an intended range when heated under a certain predetermined condition, heating for actual baking may be performed under the same condition and for the same length of time (t).

In performing induction heating, though a mold and a high-frequency induction heating coil may be positioned statically to each other, it is preferable to rotate them relative to each other while keeping their mutual positions unchanged, in order to minimize the probability of uneven heating to take place. While there is no specific limitation as to the rate of rotation, it is preferably at least 20 rmp, and, more preferably, not less than 30 rpm. Though there is no upper limit to be imposed on the rate of rotation, too high a rate of rotation will be unproductive, and there is no need to employ higher rates of rotation than, e.g., 120 rpm. In general, it will suffice to choose as desired a rate within the range of 30-60 rpm. This relative rotation may be given by rotating one of the mold and the coil relative to the other. In general, it is conveniently performed by rotating the mold, which is mounted on a rotating platform, while the coil is kept still. In addition, in the case of a partial mold having a semi-cylindrical mold surface, for example, the mold and the coil may be reciprocally moved relative to each other along their axis. For multiple molds running on a belt at a certain speed, heating may be performed in sequence, by bringing a coil close to the mold surface by placing the coil at a predetermined position at which it comes close to the mold surface of them.

In the present invention, before baking of a lubricating mold-releasing agent through induction heating of the mold surface, the layer of the lubricating mold-releasing agent should usually be dried by air, by an infrared lamp or by placing it, for a certain length of time, in an electric furnace set at a temperature at which the solvent contained in the lubricating mold-releasing agent evaporates. However, in the case where the temperature of the mold surface is brought to a predetermined baking temperature at least over a certain length of time (e.g., 5 minutes or more) by in induction heating, it is also possible to perform drying of the lubricating mold-releasing agent and baking of it consecutively, as an inseparable process or sequential processes, since the lubricating mold-releasing agent is sufficiently dried because evaporation of the solvent takes place before baking starts. In such a case, as the process of baking a lubricating mold-releasing agent also includes a drying process of the lubricating mold-releasing agent, there is no need to separately place a preceding drying process.

There is no specific limitation as to the method for applying a lubricating mold-releasing agent to the mold surface, and any method as desired may be employed, such as spray coating, brush coating and the like. In the present invention, the thickness of a baked layer of a lubricating mold-releasing agent is preferably 8-70 µm, more preferably 10-50 µm, and still more preferably 20-40 µm. As lubricating mold-releasing agents that can be applied to glass forming molds, there are known those made of a variety of compositions which contain graphite, boron nitride, silicon carbide, alumina, molybdenum disulfide, or the like. In the present invention, any of those conventionally known lubricating mold-releasing agents may be advantageously used in the present invention, because the present invention performs baking in a manner that is superior to conventional one, i.e., the a lubricating mold-releasing agent is heated and baked from the mold surface side,

### [Example 1]

Though the present invention is described in further detail below with reference to typical examples, it is no intended that the preset invention be restricted to the examples.

### {Baking of Lubricating Mold-releasing Agent Using High-frequency Induction Heating}

As glass forming molds, five types of blank molds (Test Nos. 1-5) for forming glass bottles were provided. Those blank molds, allotted Test Nos. 1-5, were blank molds used for production of glass bottles weighing 211 g, 210 g, 605 g, 118 g and 118 g, respectively. As lubricating mold-releasing agents, those of the following compositions were prepared and spray coated on the mold surface, and the blank molds allotted Test Nos. 1-3 then were subjected to natural drying for about one hour prior to baking of the lubricating mold-releasing agent.

### <Composition of Lubricating Mold-releasing Agent>

| | |
|---|---|
| Monobasic aluminum phosphate (50 wt%) | 300 g |
| Ethylamine (70 wt%) | 200 g |
| Methanol | 500 g |
| Ethylene glycol monomethyl ether | 100 g |
| Diethylene glycol monomethyl ether | 50 g |
| Graphite | 100 g |
| Clay | 2g |
| Total | 1252 g |

To perform induction heating, a high-frequency induction heating apparatus manufactured by NDK, Incorporated was used. A pair of half-molds, which together were to make up a blank mold, were secured, sandwiching between their meeting faces 2-mm thick cupper plates so that a distance corresponding to the thickness of the copper plates may be maintained between the edges of the mold surface of the pair of the molds. The edges of the plates were positioned to recede from the edges of the mold surface at least 1 mm in the direction toward the center of the meeting faces.

Induction heating coil was provided in such a shape that allows the coil to be inserted into a blank mold, as assembled above, from its bottom side and be positioned about 3 mm away from the mold surface.

The lubricating mold-releasing agent was baked by induction heating the mold surface under the conditions as indicated in Table 1, at a frequency of 40 kHz and at about 3-mm distance between the induction heating coil and the mold surface. For the blank molds allotted Test Nos. 4 and 5, a process for drying under the conditions as indicated in Table 1 (2 kV, 2A) was included in the initial part of the baking process. Heating for baking the lubricating mold-releasing agent was terminated when the mold surface reached 400 °C. To identify the temperature of the mold surface, a crayon-type marker Tempil stick (trade name: Tempil, Inc., New York), product No. TSC-400, which was characterized by its melting at 400 °C, was used.

**[Table 1]**

| Test No. | Frequency | Voltage | Current | Baking Temp. | Heating time |
|---|---|---|---|---|---|
| 1 | 40 kHz | 6 kV | 6.5 A | 400 °C | 39 sec |
| 2 | 40 kHz | 6 kV | 6.5 A | 400 °C | 55 sec |
| 3 | 40 kHz | 10 kV | 13 A | 400 °C | 20 sec |
| 4 | 40 kHz | 2 kV | 2 A | - | 150 sec |
| | | 5 kV | 6.5 A | 400 °C | 62 sec |
| 5 | 40 kHz | 2 kV | 2 A | - | 180 sec |
| | | 5 kV | 6.5 A | 400 °C | 40 sec |

On the mold surface of each of the blank molds allotted test Nos. 1-5 on which the lubricating mold-releasing agent was baked, a smooth layer of lubricating mold-releasing agent was obtained which was free of blistering, peeling or surface roughening. The durable hours of blank molds of test No. 1 (n = 4), when used to produce formed glass objects, was 40 hours, 33.5 hours, 39.0 hours, and 24.5 hours, respectively, giving a mean value of 34.3 hours. This was longer than the durable hours measured with similar blank molds, which were blank molds for 130-g and 145-g glass bottles and had been baked in an electric oven for 1 hour and 4.5 hours, respectively, and showed mean durable hours of 17.3 hours (n = 3) and 17.1 hours (n = 7).

### [Example 2]

### {Measurement of Friction Coefficients of Baked Lubricating Mold-releasing Agent}

In order to compare the lubricating property of their surface, friction coefficients were measured of the layers of the lubricating mold-releasing agent, which were either baked by high-frequency induction heating or baked in an electric oven. By reason of technical restrictions on measurement, smoothly polished circular plates of cast iron (material: FC200), 60 mm in diameter and 10 mm in thickness, were used instead of glass forming molds, and they were spray coated on their surface with the lubricating mold-releasing agent described in Example 1, and subjected to baking under the conditions indicated in the following table.

**[Table 2]**

| Test No. | Sample number | Frequency | Voltage | Current | Temperature | Heating time |
|---|---|---|---|---|---|---|
| 6 | 6 | 40 kHz | 3.0 kV | 2.8 A | 400 °C | 36 sec |
| 7 | 3 | 40 kHz | 3.0 kV | 2.8 A | 400 °C | 36 sec |
| 8 | 3 | 40 kHz | 3.0 kV | 3.3 A | 400 °C | 34 sec |
| 9 | 2 | 40 kHz | 3.5 kV | 3.5 A | 400 °C | 20 sec |
| 10 | 6 | Electric furnace | - | - | 400 °C | 1 hr |
| 11 | 3 | Electric furnace | - | - | 400 °C | 1 hr |
| 12 | 9 | Electric furnace | - | - | 400 °C | 1 hr |

Coefficient of static friction and coefficient of dynamic friction were measured of the baked lubricating mold-releasing agent of Test Nos. 6-12. The measurement was performed as follows in accordance with Method B of JIS K 7128, the method for measurement of sliding ware resistance of plastics, but, contrary to Method B, using a sample as a rotating disk and the pin as a counterpart material which contact the sample. Briefly, each of the plates was attached at its center to a horizontal rotating shaft, with its baked layer of a lubricating mold-releasing agent facing on one side. The center of a pin made of soda glass, 8 mm in diameter and 20 mm in length, which had its tip smoothly polished, was vertically applied sidewise onto the layer of the lubricating mold-releasing agent, at a position 20 mm away from the center of the sample, at a constant load (98.1 N), and the force received by the pin was measured at the time when rotation was started from the static state and while a constant rate of rotation was maintained (500 rpm), and the coefficient of static friction and that of dynamic friction, respectively, were calculated. In this, measurement was performed while keeping the temperature of both of the sample and the pin at 500 °C to approximate their temperature to that experienced during the process of forming glass bottles. The results are shown as mean values in Table 3.

**[Table 3]**

| Test No. | Coefficient of static friction | Coefficient of dynamic friction |
|---|---|---|
| 6 | 0.0417 | 0.0115 |
| 7 | 0.0483 | 0.0160 |
| 8 | 0.0350 | 0.0093 |
| 9 | 0.0450 | 0.0105 |
| 10 | 0.0893 | 0.0420 |
| 11 | 0.0783 | 0.0130 |
| 12 | 0.1231 | 0.0232 |

As shown in Table 3, it was found that Test Nos. 6-9 (baked by high-frequency induction heating) exhibited lower values in both coefficients of static friction and dynamic friction, which, as a whole, were about one half as compared with Test Nos. 10-12 (baked in an oven), thus having increased lubricity.

The results from Test Nos. 6-12 were divided into those from Test Nos. 6-9, in which high-frequency induction heating had been used, and those from Test No. 10-12, in which heating had been done using an electric furnace, and they were compared regarding their coefficients of static friction and dynamic friction, in terms of their mean values, maximum values, minimum values, and standard deviations. The results are shown in Table 4.

**[Table 4]**

| | | High-frequency induction heating | Heating in an electric furnace |
|---|---|---|---|
| Coefficient of static friction | Sample number | 14 | 18 |
| | Mean | 0.042 | 0.104 |
| | Minimum | 0.030 | 0.065 |
| | Maximum | 0.060 | 0.190 |
| | SD | 0.0116 | 0.0326 |
| Coefficient of dynamic friction | Sample number | 14 | 18 |
| | Mean | 0.012 | 0.028 |
| | Minimum | 0.007 | 0.009 |
| | Maximum | 0.019 | 0.061 |
| | SD | 0.0030 | 0.0153 |

As shown in Table 4, it was found that the layers of the lubricating mold-releasing agent which had been baked through high-frequency induction heating had remarkably smaller standard deviation in both coefficients of static friction and dynamic friction, i.e., about a third in the former and about a fifth in the latter as compared with the layers which had been baked by heating in an electric furnace, and thus deviation among samples was suppressed in both of the coefficients of friction. This indicates that high-frequency induction heating is advantageous to endowing the baked layer of a lubricating mold-releasing agent a quality which is uniform from mold to mold, and thereby contributes toward a uniform surface quality of formed glass objects, and, by leading to reduction of durability variation from mold to mold, is advantageous also in conducting process control.

### [INDUSTRIAL APPLICABILITY]

The present invention enables to prepare, in far shorter time as compared with the conventional method, glass forming molds having on their mold surface a baked layer of a lubricating mold-releasing agent of improved and uniform lubricating property, and thereby not only improves efficiency of the production process of formed glass objects but also facilitates production of formed glass objects having uniform quality.

## Claims

1. A method for preparation of a glass forming mold having a baked layer of a lubricating mold-releasing agent on the mold surface thereof, wherein the method comprises placing the mold surface with an applied lubricating mold-releasing agent thereon to face a high-frequency induction heating coil at a predetermined mutual position, and heating the mold surface by exposing the same to a high-frequency magnetic flux by passing a high-frequency electric current to the high-frequency induction heating coil, at a power output so adjusted that the mold surface may reach a predetermined baking temperature in a predetermined length of time after the start of heating, and for the predetermined length of time, wherein
the predetermined baking temperature is a temperature in the range of from 300 to 600 °C, the length of time for which the mold surface is exposed to the high-frequency magnetic flux for heating is a length of time in the range of from 5 seconds to 30 minutes, and
wherein the predetermined baking temperature is reached in not shorter than 5 seconds.

2. The method of claim 1, wherein at least part of the high-frequency induction heating coil comes close to the mold surface up to a distance within 50 mm therefrom.

3. The method of claim 1 or 2, wherein the mold surface and the high-frequency induction heating coil are moved relative to each other while the mold surface is being exposed to the high-frequency magnetic flux.

4. The method of claim 3, wherein the mold surface and the high-frequency induction heating coil are rotated relative to each other while the mold surface is being exposed to the high-frequency magnetic flux.

5. The method of claim 4, wherein the rate of rotation is at least 20 rpm.

6. The method of one of claims 1 to 5, wherein the mold comprises multiple partial molds, and wherein the mold surface is exposed to the high-frequency magnetic flux, with multiple partial molds of the mold being electrically connected to one another and brought together and secured while maintaining a gap of at least 1 mm between the edges of any two adjacent partial molds.

## Patentansprüche

1. Verfahren zur Herstellung eines Glasformungswerkzeugs, das auf seiner Formfläche mit einer gebrannten Schicht eines schmierenden Formtrennmittels versehen ist, wobei das Verfahren Folgendes umfasst: Anordnen der Formfläche mit einem darauf aufgebrachten schmierenden Formtrennmittel dergestalt, dass sie einer Hochfrequenzinduktionsheizspule an einer vorgegebenen gegenseitigen Position zugewandt ist, und Erwärmen der Formfläche durch Inkontaktbringen der Formfläche mit einem Hochfrequenzmagnetfluss, wobei ein hochfrequenter elektrischer Strom durch die Hochfrequenzinduktionsheizspule geleitet wird, wobei eine Ausgangsleistung so eingestellt wird, dass die Formfläche eine vorgegebene Brenntemperatur innerhalb einer vorgegebenen Zeitdauer nach dem Beginn der Erwärmung erreichen und über die vorgegebene Zeitdauer halten kann, wobei die vorgegebene Brenntemperatur eine Temperatur im Bereich von 300 bis 600 °C ist, die Zeitdauer, welche die Formfläche dem Hochfrequenzmagnetfluss zum Erwärmen ausgesetzt wird, eine Zeitdauer im Bereich von 5 Sekunden bis 30 Minuten ist und
wobei die vorgegebene Brenntemperatur nicht früher als nach mindestens 5 Sekunden erreicht wird.

2. Verfahren nach Anspruch 1, wobei sich mindestens ein Teil der Hochfrequenzinduktionsheizspule auf eine Entfernung von 50 mm an die Formfläche annähert.

3. Verfahren nach Anspruch 1 oder 2, wobei die Formfläche und die Hochfrequenzinduktionsheizspule relativ zueinander bewegt werden, während die Formfläche dem Hochfrequenzmagnetfluss ausgesetzt wird.

4. Verfahren nach Anspruch 3, wobei die Formfläche und die Hochfrequenzinduktionsheizspule relativ zueinander gedreht werden, während die Formfläche dem Hochfrequenzmagnetfluss ausgesetzt wird.

5. Verfahren nach Anspruch 4, wobei die Drehzahl mindestens 20 U/min beträgt.

6. Verfahren nach einem der Ansprüche 1 bis 5, wobei das Formwerkzeug mehrere Teilformen umfasst, und wobei die Formfläche dem Hochfrequenzmagnetfluss ausgesetzt wird, wobei mehrere Teilformen des Formwerkzeugs elektrisch miteinander verbunden werden und zusammengebracht und gesichert werden, während ein Spalt von mindestens 1 mm zwischen den Rändern von jeweils zwei benachbarten Teilformen beibehalten wird.

## Revendications

1. Procédé de préparation d'un moule de formage du verre comportant une couche cuite composée d'un agent lubrifiant de démoulage sur la surface du moule, le procédé comprenant le positionnement de la surface du moule sur laquelle a été appliqué l'agent lubrifiant de démoulage, en regard d'un serpentin de chauffage par induction à haute fréquence, à une position relative prédéterminée, et le chauffage de la surface du moule par exposition de celle-ci à un flux magnétique à haute fréquence par passage d'un courant électrique à haute fréquence dans le serpentin de chauffage par induction à haute fréquence, à une puissance de sortie réglée de manière que la surface du moule puisse atteindre une température de cuisson prédéterminée, en un intervalle de temps prédéterminé, après le début du chauffage, et pendant l'intervalle de temps prédéterminé, dans lequel :
la température de cuisson prédéterminée est une température se situant dans la plage de 300 à 600 °C, l'intervalle de temps pendant lequel la surface du moule est exposée au flux magnétique à haute fréquence destiné au chauffage est un intervalle de temps se situant dans la plage de 5 secondes à 30 minutes, et
dans lequel la température de cuisson prédéterminée est atteinte en 5 secondes au moins.

2. Procédé selon la revendication 1, dans lequel une partie au moins du serpentin de chauffage par induction à haute fréquence se rapproche de la surface du moule à une distance de 50 mm au plus de celui-ci.

3. Procédé selon la revendication 1 ou 2, dans lequel la surface du moule et le serpentin de chauffage par induction à haute fréquence sont déplacés l'un par rapport à l'autre, tandis que la surface du moule est exposée au flux magnétique à haute fréquence.

4. Procédé selon la revendication 3, dans lequel la surface du moule et le serpentin de chauffage par induction à haute fréquence sont entraînés en rotation l'un par rapport à l'autre, tandis que la surface du moule est exposée au flux magnétique à haute fréquence.

5. Procédé selon la revendication 4, dans lequel la vitesse de rotation est d'au moins 20 tr/min.

6. Procédé selon l'une des revendications 1 à 5, dans lequel le moule comprend de multiples moules partiels, et dans lequel la surface du moule est exposée au flux magnétique à haute fréquence, les multiples moules partiels du moule étant électriquement reliés les uns aux autres et réunis et fixés, un espace d'au moins 1 mm étant maintenu entre les bords de n'importe quelle paire de moules voisins.
